# FASCICULE DE BREVET EUROPEEN

(11) **EP 3 538 342 B1**
(45) Date de publication et mention de la délivrance du brevet: **04.01.2023**
(21) Numéro de dépôt: 17808539.5
(22) Date de dépôt: 08.11.2017
(51) Int. Cl.: B29C 48/285, B29C 48/375, B29C 48/41

(54) **ENSEMBLE D'EXTRUSION VOLUMETRIQUE POUR MELANGES D'ELASTOMERES**
ANORDNUNG ZUR VOLUMETRISCHEN EXTRUSION FÜR ELASTOMERMISCHUNGEN
VOLUMETRIC EXTRUSION ASSEMBLY FOR ELASTOMER MIXTURES

(30) Priorité: 08.11.2016 FR 1660797
(43) Date de publication de la demande: 18.09.2019
(73) Titulaire: Compagnie Générale des Etablissements Michelin, 63000 Clermont-Ferrand (FR)
(72) Inventeur: OUGIER, Christophe, 63040 Clermont-Ferrand Cedex 9 (FR); MONNEREAU, Patrice, 63040 Clermont-Ferrand Cedex 9 (FR); LETOCART, Arnaud, 63040 Clermont-Ferrand Cedex 9 (FR)
(74) Mandataire: Redouté, Gilles Pierre
(86) Numéro de dépôt international: PCT/FR2017/053041
(87) Numéro de publication internationale: WO 2018/087467

(56) Documents cités:
- EP-A1- 2 353 839
- EP-A1- 2 444 228
- EP-A1- 2 662 196
- DD-A1- 231 029
- DE-C1- 19 860 836
- DE-U1-202013 009 015
- DE-U1-202013 009 015
- JP-U- S55 179 820

## Description

L'invention concerne le domaine de l'extrusion volumétrique des mélanges d'élastomères plus particulièrement destinés à la fabrication des pneumatiques. Plus particulièrement, elle concerne la fabrication d'un profilé réalisé à base de mélanges d'élastomères.

On connaît l'utilisation des extrudeuses à vis sans fin couplées à des pompes volumétriques à engrenages permettant de fournir un débit élevé et de le maintenir constant, malgré les pertes de charge inhérentes aux outillages de mise en forme. Le document EP 0 508 285 décrit un ensemble d'extrusion pour mélanges d'élastomères formé d'une extrudeuse à vis sans fin et une pompe a engrenages, cette dernière étant montée entre l'orifice de sortie de l'extrudeuse et la filière d'extrusion. La forte viscosité du matériau qui transite l'ensemble induit des contraintes mécaniques élevées et pose des problèmes de fuite. De surcroît, le passage du matériau élastomèrique entre les dents des engrenages induit un fort taux de cisaillement et d'échauffement qui pose de problèmes pour un matériau dont la température d'extrusion ne doit pas excéder une limite préétablie afin d'éviter une vulcanisation prématurée. Pour éviter cela, les engrenages de la pompe devraient être surdimensionnés et amenés à tourner à une vitesse de rotation très faible. Cela amènerait à construire des installations d'un encombrement important et très coûteuses.

Une solution à ce problème a été proposé dans le document WO 03/016024 au nom de la demanderesse qui décrit une pompe volumétrique comportant deux vis d'axes parallèles contrarotatives et dotées d'une géométrie particulière. Plus particulièrement, les deux vis sont munies, sur une grande partie de leur longueur, de filets réalisés de manière à ce que les vis tournent dans une chambre commune sans se toucher, pour transférer le mélange d'élastomères vers la sortie à partir d'une zone d'alimentation. La géométrie des filets change en bout des vis de manière à ce que les filets coopèrent pour former des chambres permettant de pomper volumétriquement le mélange. Pour réaliser l'étanchéité à l'extrémité d'entraînement de chaque vis, celle-ci est munie de systèmes d'étanchéité complexes à rainures de type « viscoseal ». Par ailleurs, une telle pompe volumétrique s'avère d'un encombrement assez important dû notamment à sa longueur.

D'autres solutions de pompage volumétrique sont connues dans le domaine de la plasturgie. Notamment les documents DE 19930970 et US 2015/0086669 décrivent chacun une extrudeuse à vis sans fin qui fonctionne de manière indépendante pour plastifier le matériau avant d'alimenter une pompe bi-vis. La pompe bi-vis comprend deux vis à filets conjugués qui sont entraînées en rotation et forment des chambres de pompage pour transférer le matériau à partir d'une goulotte d'alimentation vers une buse de sortie. Une telle pompe bi-vis permet de maîtriser le débit et de générer une pression en sortie, elle étant alimentée par l'extrudeuse sans pression ou à très faible pression.

Des solutions pour alimenter des extrudeuses de mélangeage sont connues des documents DE 202013009015U, DD 231029, EP2662196, EP2444228. Toutefois, ces documents décrivent l'alimentation de ces extrudeuses à faible pression, voire à pression atmosphérique et, de ce fait, les problèmes d'étanchéité sont moindres avec ces dispositifs et résolus par des moyens généralement connus.

Or, lorsqu'on veut appliquer cette solution à l'extrusion des élastomères, on doit faire face à d'autres problèmes. Lors de l'extrusion d'un mélange d'élastomères, on a besoin, la plupart du temps, d'ajuster le travail fourni par l'extrudeuse à vis sans fin car les propriétés des mélanges sont très différentes selon leur composition. Plus particulièrement, la plasticité des mélanges d'élastomères varie avec leur composition, notamment avec le type d'élastomère utilisé, la quantité des charges, etc. Afin de moduler le travail apporté au mélange, on fait souvent patiner la vis de l'extrudeuse d'alimentation, le débit de celle-ci étant, lui, constant en étant imposé par la pompe disposée en aval de l'extrudeuse. De plus, pour que le travail soit efficace, il doit être le résultat du cisaillement du mélange à l'intérieur de l'extrudeuse et non pas de son glissement. De ce fait, de par le fort taux de cisaillement et de la forte viscosité du matériau, les valeurs de la pression en sortie de l'extrudeuse d'alimentation augmentent beaucoup, cette pression étant ensuite reprise par la pompe bi-vis. Afin de protéger la partie d'entraînement des vis de la pompe, notamment le réducteur de celle-ci, on doit la munir de systèmes d'étanchéité qui puissent résister à de fortes pressions.

Le but de l'invention est de remédier aux inconvénients des documents précités et de proposer une solution originale aux problèmes d'étanchéité des ensembles d'extrusion volumétrique.

Cet objectif est atteint avec un ensemble d'extrusion volumétrique destiné à l'extrusion d'un mélange d'élastomères, comportant une extrudeuse d'alimentation à vis sans fin qui tourne dans un fourreau muni d'une goulotte d'alimentation en mélange qui est transféré à une extrémité de sortie reliée à un orifice d'entrée dans la chambre d'une pompe bi-vis, la pompe bi-vis comprenant deux vis contrarotatives qui sont amenées à tourner à l'intérieur de ladite chambre lorsqu'elles sont mises en rotation à une extrémité d'entraînement pour transférer le mélange à une extrémité aval, les vis comportant des filets en forme d'hélice qui sont réalisés de manière à ce qu'ils s'interpénètrent en ayant des profils conjugués, caractérisé en ce que ledit orifice d'entrée est décalé en aval d'une distance d prédéterminée par rapport au début du filetage des vis de la pompe bi-vis de manière à ce que la rotation des vis empêche le passage du mélange en amont.

L'ensemble d'extrusion volumétrique de l'invention comporte ainsi une extrudeuse à vis sans fin qui alimente, à partir d'un orifice d'entrée, une pompe bi-vis comportant des vis contrarotatives ayant des filets interpénétrés et profils conjugués. La pompe bi-vis comporte ainsi deux vis entraînées en rotation à l'une de leurs extrémités par un moteur et un réducteur. Les profils des vis de la pompe bi-vis présentent ainsi un jeu très faible dans la région centrale proche d'un axe longitudinal médian passant à mi-distance des axes de rotation des vis, ce qui fait que les deux vis sont pratiquement étanches au mélange dans cette région, alors qu'elles forment des cavités en forme de C avec la périphérie du corps de la pompe. Une telle pompe bi-vis est donc une pompe volumétrique qui permet de maîtriser le débit du mélange transféré et, le cas échéant, de générer une pression permettant au mélange de passer à travers une filière située en sortie de la pompe.

Selon l'invention, une extrudeuse à vis sans fin alimente sous pression, via un orifice d'entrée, les cavités en C de la pompe bi-vis de manière à qu'elles soient complétement remplies, tout en permettant d'avoir une bonne étanchéité côté réducteur d'entraînement des vis. Plus particulièrement selon l'invention, l'orifice d'entrée est décalé en aval d'une distance d prédéterminée par rapport au début du filetage des vis de la pompe bi-vis dans la zone d'alimentation de celle-ci de manière à ce que la rotation des vis pour refouler le mélange empêche le passage du mélange en amont de la pompe bi-vis. Par aval et amont on comprend tel que vu par rapport à la direction de déplacement du mélange à l'intérieur de la pompe lorsque les vis tournent pour transférer le mélange entre l'orifice d'entrée et une extrémité de sortie de la pompe.

La distance d est définie de manière à isoler la partie d'entraînement des vis en utilisant l'étanchéité réalisée entre les cavités en C formées par les filets de la pompe bi-vis avec la chambre. Ainsi, on choisit cette distance de manière à ce que le mélange arrive dans des cavités fermées en amont, voire en train de se fermer, avec la rotation des vis. La distance d est donc étroitement liée au pas p que les vis de la pompe bi-vis présentent dans la zone d'alimentation de la pompe et est choisie en fonction de ce pas p. Ainsi, à faible vitesse de rotation de la vis et pour des mélanges très visqueux, la distance d est égale ou supérieure au pas p. Par ailleurs, pour des mélanges visqueux et des régimes plus dynamiques la distance d peut être réduite et être inférieure au pas p, notamment égale à 0,5p.

On alimente ainsi la pompe en mélange sous pression dans une zone dans laquelle ces chambres sont fermées par les filets des deux vis. On obtient ainsi une étanchéité totale même pour des pressions importantes, de l'ordre de 50 à 250 bars, du mélange à l'intérieur de la pompe bi-vis. Ceci permet de protéger de manière efficace le réducteur.

De surcroît, il a été constaté lors des tests effectués en laboratoire que le remplissage forcé, en pression par l'augmentation du cisaillement dans la vis d'alimentation, des cavités de la pompé permet de fournir un travail supplémentaire au mélange d'élastomères.

De préférence, l'hélice des vis présente un pas p dans la zone d'alimentation et ledit orifice d'entrée est positionné avec son bord le plus proche de ladite extrémité d'entraînement à une distance d égale ou supérieure au pas p, la distance d étant mesurée à partir du début du filetage des vis au niveau de ladite extrémité.

Selon un aspect très avantageux de l'invention, ledit orifice d'entrée est positionné de manière à ce que le mélange arrive dans la zone d'alimentation à une distance d égale ou supérieure au pas p des vis de la pompe bi-vis par rapport au début du filetage à l'extrémité d'entraînement des vis. Par p on désigne le pas de vis des vis dans la zone d'alimentation. Le pas de vis mesure la distance entre une forme de la structure du filet de la vis et sa plus proche répétition trouvée par translation selon l'axe de rotation de la vis.

En effet, ceci permet de garantir qu'une cavité en C est parfaitement fermée en amont (côté entrainement de la vis) au moment où elle commence à s'ouvrir dans la zone d'alimentation sous pression, au regard de l'orifice d'entrée. Ceci représente une valeur minimum pour garantir une étanchéité même à une faible vitesse de rotation des vis (de l'ordre de quelques tours/min).

Par ailleurs, pour des mélanges particulièrement fluides, on choisit la distance d égale à un pas et une épaisseur de filet. Ainsi, si l'on considère l'épaisseur du filet égale à 1/(2 x Nf), ou Nf est le nombre de filets de la vis, la distance d est égale à 1,5p pour une vis monofilet, à 1,25p pour une vis à double hélice et à 1,125p pour une vis à quatre filets.

Avantageusement, ledit orifice de sortie est directement relié audit orifice d'entrée. Ainsi, l'extrudeuse d'alimentation débite directement dans la chambre de la pompe bi-vis, ce qui permet d'éviter d'avoir recours à des éléments intermédiaires de type goulotte de transfert nécessitant l'agencement de systèmes d'étanchéité supplémentaires.

De préférence, les vis de la pompe bi-vis ont un pas variable sur leur longueur, le pas p ayant la plus petite valeur. Ceci permet de diminuer la distance d et donc de gagner en longueur utile de la pompe.

Avantageusement, ledit orifice d'entrée a une section transversale en forme de quadrilatère avec au moins l'un des côtés égal au pas p. Ceci permet de maximiser le temps disponible pour le remplissage des chambres de la pompe bi-vis

De préférence, le filet de la vis de l'extrudeuse d'alimentation est sensiblement tangent aux filets des vis de la pompe bi-vis.

Ainsi, en disposant le filet de la vis sensiblement tangent, on comprend avec un faible jeu, d'environ quelques dizaines de mm par rapport aux filets des vis de la pompe bi-vis, on diminue de façon significative les zones de rétention de mélange à l'intérieur de l'extrudeuse d'alimentation. Ceci permet de vider complètement l'extrudeuse en fin d'opération.

Avantageusement, la vis de l'extrudeuse d'alimentation comprend un moyen d'étanchéité dynamique agencé à son extrémité de sortie. Ceci permet au mélange débité par l'extrudeuse d'alimentation de passer directement dans la pompe bi-vis.

De préférence, l'extrémité dudit moyen d'étanchéité est disposée axialement au même niveau avec le bord de l'orifice d'entrée. Ainsi, en faisant coïncider axialement l'extrémité amont du moyen d'étanchéité disposé sur la vis de l'extrudeuse d'alimentation avec le bord le plus amont de l'orifice d'entrée dans la pompe bi-vis, on arrive à mieux transférer le mélange dans l'orifice tout en minimisant les zones de rétention du mélange à l'intérieur de l'extrudeuse.

Avantageusement, ledit orifice d'entrée est bordé de parois s'étendant radialement à l'intérieur de la chambre de la pompe bi-vis. Cela permet de mieux orienter le mélange à l'intérieur de la pompe bi-vis.

De préférence, au moins l'une desdites parois présente une face interne inclinée en direction de l'axe des vis de la pompe bi-vis. Ceci permet d'obtenir une accroche du mélange lors de l'évacuation du mélange en fin d'opération.

De préférence, l'extrudeuse à vis sans fin est agencée au-dessus de la pompe bi-vis. Ceci permet d'obtenir un ensemble d'extrusion ayant un encombrement optimisé.

Avantageusement, la direction de l'axe de rotation de la vis de l'extrudeuse sans fin fait un angle compris entre 45° et 90° avec celle des axes des vis de la pompe bi-vis. Ceci permet d'obtenir une structure compacte de l'ensemble tout en ménageant un volume suffisant vers l'arrière pour installer les moteurs et les réducteurs.

De préférence, l'ensemble d'extrusion de l'invention comprend une unité centrale de commande reliée à des moyens de commande de la vitesse de rotation de la vis de l'extrudeuse d'alimentation et à des moyens de commande des vis de la pompe bi-vis prévue pour synchroniser la vitesse de rotation de la vis de l'extrudeuse d'alimentation et celle des vis de la pompe bi-vis selon un rapport prédéterminé.

On peut ainsi choisir le rapport de synchronisation en fonction du type de mélange utilisé et adapter ainsi le travail de plastification de l'extrudeuse d'alimentation à ce mélange. De surcroît, cette synchronisation des vitesses permet au fonctionnement de l'ensemble d'extrusion de l'invention de s'adapter à la vitesse de pose du produit extrudé par un dispositif aval.

Avantageusement, l'ensemble d'extrusion de l'invention comprend un capteur de pression agencé dans la voûte de l'extrudeuse d'alimentation relié à ladite unité centrale de commande et en ce que cette dernière adapte ledit rapport de synchronisation en fonction du signal reçu dudit capteur.

Ceci permet d'éviter d'atteindre une trop forte montée en pression dans l'extrudeuse d'alimentation et aussi d'éviter une chute de pression qui rendrait insuffisante la pression de gavage de la pompe.

Dans une variante, on adapte le rapport de synchronisation en fonction du type de mélange et/ou de la vitesse d'arrivée au niveau de la trémie d'alimentation de manière à obtenir une valeur préétablie et stable de la pression d'alimentation de la pompe bi-vis.

L'invention sera mieux comprise grâce à la suite de la description, qui s'appuie sur les figures suivantes :
- la figure 1 est une vue schématique en perspective d'un ensemble de l'invention ;
- la figure 2 est une vue partielle de dessus des vis de l'ensemble de l'invention, les autres composants de l'ensemble étant omis pour plus de clarté ;
- la figure 3 est une vue de l'ensemble de la figure 2 obtenue en retirant la vis de l'extrudeuse d'alimentation ;
- la figure 4 est une vue en coupe réalisée avec le plan A-A de la fig. 1 ;
- la figure 5 est une vue en coupe réalisée avec le plan B-B de la fig. 4 ;
- la figure 6 illustre par une vue en perspective un composant de l'ensemble de l'invention ;
- les figures 7a à 7h illustrent de manière schématique les différentes étapes de remplissage de la pompe bi-vis de l'ensemble de l'invention.

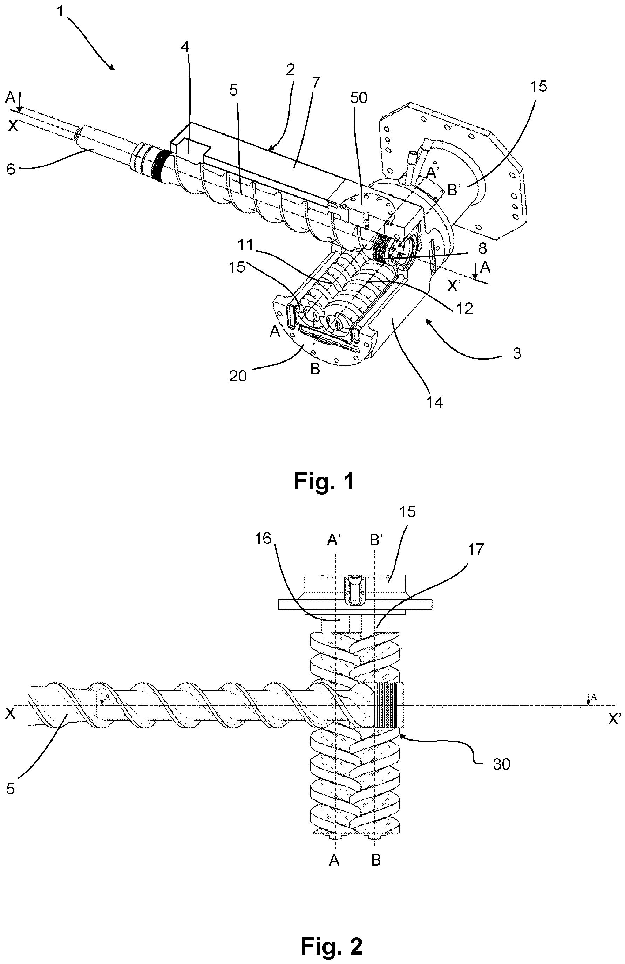

L'ensemble d'extrusion 1 représenté sur la figure 1 comprend une extrudeuse 2 à vis sans fin qui est une extrudeuse d'alimentation d'une pompe bi-vis 3 située en aval. L'extrudeuse 2 est munie, à l'une de ses extrémités, d'une trémie d'alimentation 4, en un mélange d'élastomères non vulcanisé. L'extrudeuse 2 comprend une vis 5 entraînée en rotation autour de son axe longitudinal X-X' par un motoréducteur, à partir d'une extrémité 6 de la vis 5, à l'intérieur d'un fourreau 7 de section interne circulaire. Le mélange de caoutchouc est mixé, mis en pression et température, homogénéisé avant d'arriver à l'extrémité de sortie 8 de l'extrudeuse.

L'extrudeuse 2 d'alimentation débite dans un orifice d'alimentation d'une pompe bi-vis 3. La pompe bi-vis 3 comporte deux vis 11, 12 contrarotatives à filets interpénétrés et profils conjugués. Plus particulièrement, les deux vis 11, 12 cylindriques tournent autour d'axes parallèles A-A' et B-B' qui sont, dans l'exemple décrit, perpendiculaires à l'axe X-X' de l'extrudeuse 2 d'alimentation. Les vis 11, 12 sont agencées côte-à-côte dans un boîtier qui forme le corps 14 de la pompe bi-vis et sont amenées à tourner dans une chambre 15 de section transversale en forme de huit. Le profil et les dimensions de la chambre 15 sont conçus pour correspondre avec les vis 11, 12. Plus particulièrement, un jeu faible existe entre la périphérie des filets des vis et la chambre, ce jeu radial étant compris entre 0,05 à 0,2mm.

Dans l'exemple illustré aux figures, les vis 11, 12 sont identiques, elles ont chacune deux filets hélicoïdaux de section trapézoïdale et un pas p constant sur la longueur de la vis, elles sont agencées de manière à s'engrener, les profils des deux vis 11, 12 étant conjugués. La largeur d'un creux b entre deux flancs de filets est égale à la largeur du flanc a de manière à ce que un flanc s'ajuste à l'intérieur du creux de la vis en vis-à-vis. A titre d'exemple, le jeu entre deux flancs adjacents des vis 11 et 12 est d'environ 0,3mm. Dans une variante, les filets des vis ont un pas variable, le pas p dans la zone d'alimentation ayant la plus petite valeur.

Les profils des vis 11 et 12 présentent ainsi un jeu très faible dans la région centrale de la pompe bi-vis, on comprend une région proche d'un axe longitudinal médian passant à mi-distance des axes A-A' et B-B', ce qui fait que les deux vis sont pratiquement étanches au mélange dans cette région, alors qu'elles forment des cavités en forme de C 18 fermées avec la périphérie du corps 14. Le mélange d'élastomères arrive à l'intérieur de la chambre 15 via un orifice d'entrée 30 en provenance de l'extrémité de sortie 8 de l'extrudeuse d'alimentation 2. Les vis 11, 12 sont entraînées en rotation autour de leurs axes A-A' et B-B' en sens contraires par un motoréducteur 15 comportant deux arbres de sortie, un pour chaque vis. Les deux vis 11, 12 sont ainsi entraînées en même temps, à leurs extrémités 16, 17, à une même vitesse et dans des sens contraires par le motoréducteur 15. Une telle pompe bi-vis est une pompe volumétrique, car de par sa construction, le volume de mélange qu'elle transfère est défini de manière précise par le volume de ses chambres (ou cavités en forme de C) fermées. Ainsi, un tour de vis définit de manière précise le volume transféré, le débit de la pompe étant fonction uniquement de la vitesse de rotation des vis de la pompe bi-vis.

L'ensemble d'extrusion comprend également un dispositif de mise en forme du mélange ou filière (non illustrée sur les dessins), montée à l'extrémité de sortie 20 de la pompe bi-vis et ayant une section transversale de sortie qui donne la forme géométrique au profil extrudé obtenu lors du passage à travers la filière du mélange en provenance de la pompe bi-vis 3.

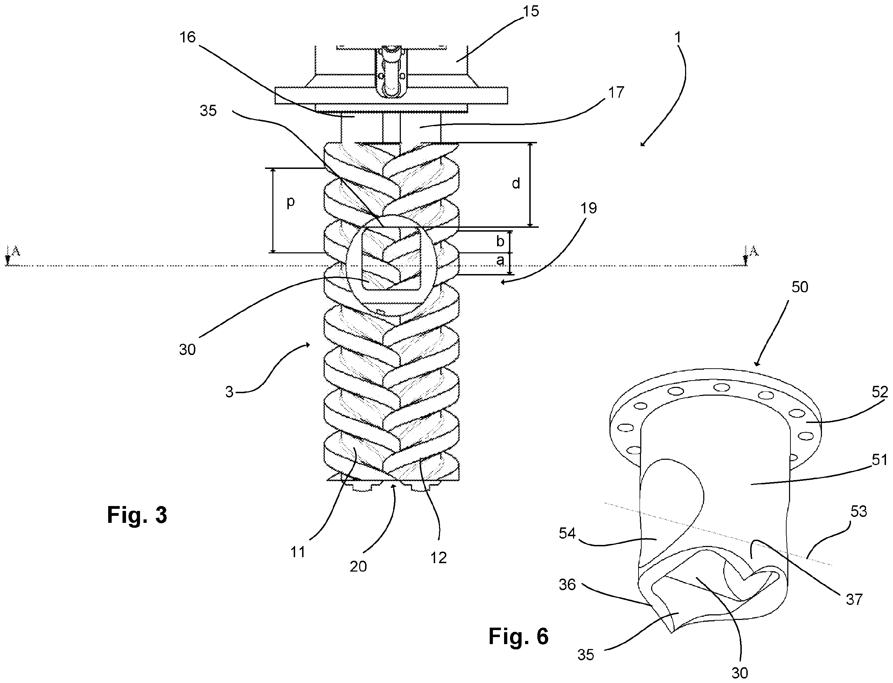

Selon l'invention, ledit orifice d'entrée 30 est positionné avec son bord 35 qui se situe le plus proche de l'extrémité d'entraînement 16, 17 des vis 11, 12 à une distance d prédéterminée par rapport au début du filetage des vis 11,12 de la pompe bi-vis de manière à ce que la rotation des vis empêche le passage du mélange en amont à l'intérieur de la pompe bi-vis 3. La distance d est choisie en en fonction du type de mélange et de la vitesse de rotation des vis, elle est comprise entre 0,5p et le pas p plus une épaisseur de filet des vis 11, 12 dans la zone d'alimentation 19. La zone d'alimentation est la partie située entre les débuts des filets en amont, vers les extrémités d'entrainement 16, 17 et la sortie de l'orifice d'alimentation 30. Dans l'exemple représente dans les figures, la distance d est supérieure au pas p, de préférence égale ou supérieure à 1,25*p pour une vis à deux filets, la distance d étant mesurée à partir du début du filetage des vis 11, 12 au niveau de ladite extrémité d'entraînement. Tel que mieux visible à la fig. 3, l'orifice d'entrée 30 est disposé de manière à ce que ces bords s'étendent à mi-distance par rapport à la périphérie des vis 11, 12, il présente une section de passage du mélange de forme carrée et il est bordé de parois 35 formées en une seule pièce avec le carter de l'extrudeuse d'alimentation 2. La section transversale de l'orifice d'entrée 30 a une forme carrée de côté égal au pas p. Dans une variante, l'orifice est rectangulaire ayant le plus petit côté égal au pas p. Dans encore une autre variante, l'orifice a une forme circulaire de diamètre égal au pas p.

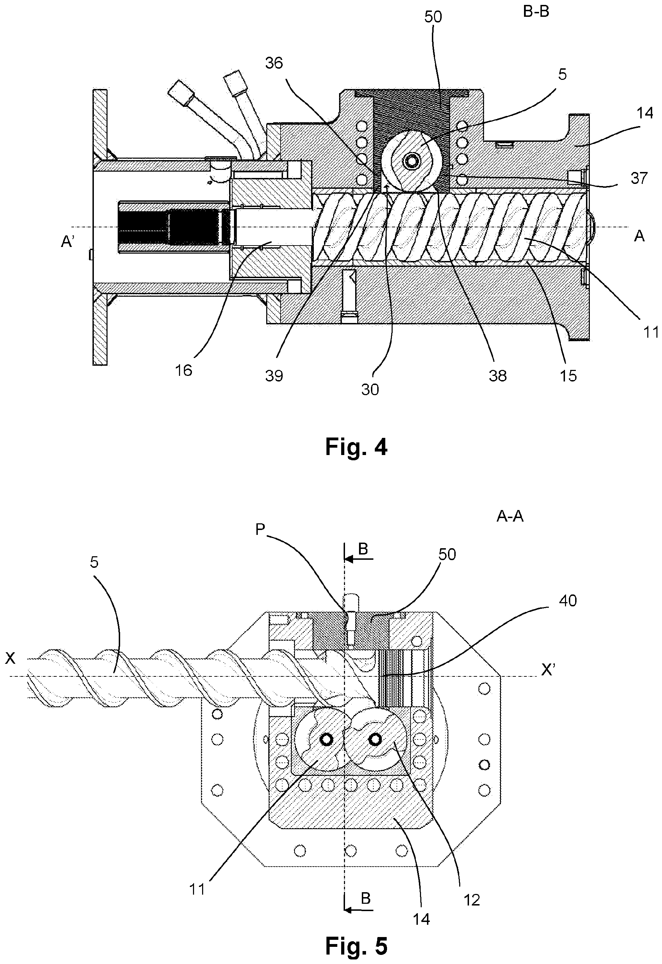

Tel que mieux visible aux figures 1 et 5 la jonction entre la sortie de l'extrudeuse d'alimentation 2 et la pompe bi-vis est faite à l'aide d'une cartouche 50 montée sur le fourreau 7. La cartouche 50 est mieux visible à la figure 6. Elle a une forme générale de révolution autour d'un axe longitudinal perpendiculaire à l'axe X-X' de la vis 5, elle est formée d'un corps 51 cylindrique comportant une collerette 52 de fixation au fourreau 7 à l'une de ses extrémités. La cartouche 50 comporte, à l'extrémité opposée à celle de fixation l'orifice d'entrée 30 bordé des parois 36, 37. Les parois 36, 37 ont une forme en double arc de cercle qui sont contigües aux parois de la chambre 15 au niveau de l'orifice d'entrée 30 dans un but d'étanchéité. La cartouche 50 comprend également un orifice 54 d'axe 53 coaxial à l'axe X-X' et permettant le passage de la vis 5. L'orifice 54 débouche dans l'orifice d'entrée 30. La cartouche 50 est réalisée en un acier traité thermiquement pour résister à l'usure. Elle est interchangeable dans un but de remplacement après usure ou pour un changement dimensionnel (taille de l'orifice d'entrée, dimensions vis).

Selon un aspect important de l'invention, le filet de la vis 5 de l'extrudeuse d'alimentation 2 est tangent aux filets des vis 11,12 de la pompe bi-vis 3, un jeu d'environ 1mm étant ménagé entre le diamètre externe du filet de la vis d'alimentation 5 et le diamètre externe des filets des vis 11, 12 de la pompe bi-vis.

Selon un aspect préféré de l'invention, la vis 5 de l'extrudeuse d'alimentation 2 comprend un moyen d'étanchéité dynamique 40 agencé à son extrémité de sortie avoisinant l'orifice de sortie 8. Dans l'exemple illustré, le moyen 40 est un système de type « viscoseal », autrement dit un système d'étanchéité comportant une nervure hélicoïdale de faibles dimensions et faible pas disposée à la périphérie de l'arbre de la vis qui, en tournant, permet de refouler le fluide dans les rainures crées par la nervure et former ainsi une étanchéité dynamique avec le fourreau.

L'extrémité dudit moyen d'étanchéité dynamique 40 est disposée axialement au même niveau avec le bord 35 de l'orifice d'entrée 30 dans la chambre 15 de la pompe bi-vis 3.

De manière avantageuse, l'orifice d'entrée 30 est bordé de parois 36, 37 s'étendant radialement à l'intérieur de la chambre 15 de la pompe bi-vis 3 pour faire étanchéité avec celle-ci. La paroi 37 située plus en amont présente chacune une face interne inclinée 38 en direction de l'axe des vis de la pompe bi-vis permettant de mieux accrocher la gomme lors du vidage de l'extrudeuse d'alimentation 2.

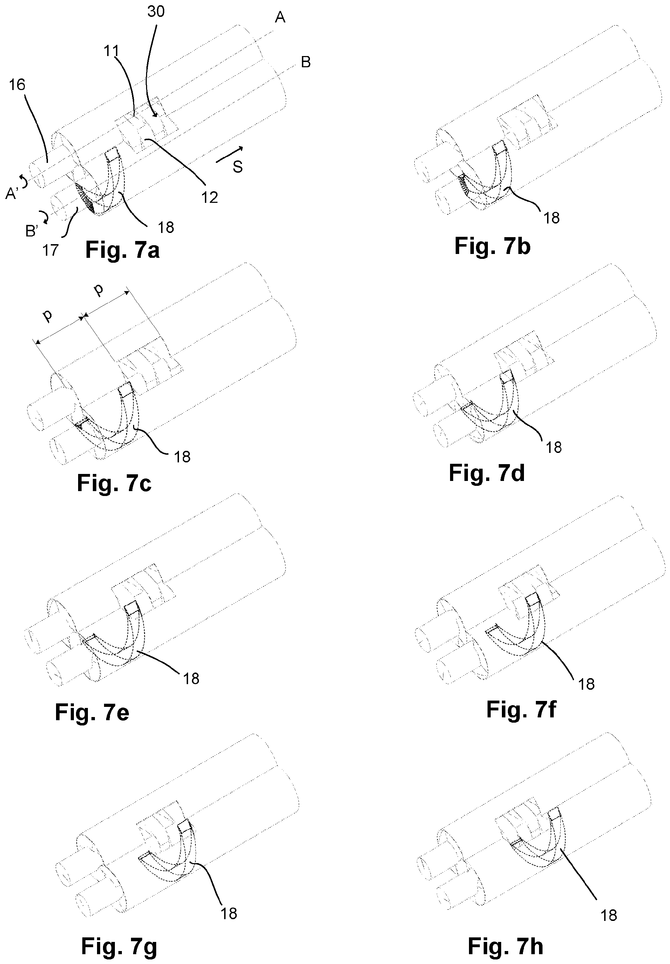

Les figures 7a à 7h illustrent par des vues schématiques en perspective la formation et la progression d'une cavité 18 lors de la rotation des vis 11, 12 de la pompe bi-vis. La cavité 18 avance dans sens de la flèche S lors de la rotation des vis 11, 12 dans le sens de rotation indiqué par les flèches. La cavité 18 est en train de se former en figures 7a et 7b et elle est complète à la figure 7c. Ainsi, en figure 7c on remarque une cavité 18 complète et complètement fermée côté admission (au niveau de l'orifice d'entrée 30) et côté réducteur (au niveau des extrémités 16, 17 d'entraînement des vis). Une telle cavité est située à une distance d égale au pas p, tel que indiqué sur la figure 7c, l'orifice d'entrée 30 ayant une ouverture de longueur axiale égale au pas p également. La figure 7d illustre une cavité 18 en train d'être remplie via l'orifice d'entrée 30. La cavité se remplit lors de la rotation des vis, tel que visible aux figures 7d à 7g. La figure 7h illustre la cavité 18 complétement fermée côté admission (orifice d'entrée) en train de transporter le mélange en direction de l'extrémité de sortie de la pompe bi-vis.

L'ensemble de l'invention comprend également une unité de contrôle qui est apte à ajuster la vitesse de rotation des vis 11,12 de la pompe bi-vis 3 et de la vis 5 de l'extrudeuse 2 d'alimentation de manière à ce que les vitesses soient synchronisées selon un rapport préétabli.

Ainsi, afin de pouvoir régler le niveau de plastification, la vitesse de la vis 5 de l'extrudeuse d'alimentation 2 est synchronisée avec la vitesse de rotation des vis 11, 12 de la pompe bi-vis 3. En faisant varier la valeur du rapport de synchronisation, on arrive à ajuster le taux de plastification de l'extrudeuse 2. A titre d'exemple, si l'on considère que l'extrudeuse d'alimentation 2 et la pompe bi-vis 3 ont le même débit pour un rapport de synchronisation de 1, pour un rapport de synchronisation égal à 2, en conservant constante la vitesse des vis 11 et 12 de la pompe bi-vis 3, la vis 5 de l'extrudeuse d'alimentation va tourner deux fois plus vite. Son débit par tour de rotation va alors être divisé par deux, puisque le débit est imposé par la pompe bi-vis. De ce fait, le taux de plastification du mélange à l'intérieur de l'extrudeuse 2 va augmenter.

De surcroît, commander la vitesse de rotation de la vis 5 et celle des vis 11, 12 de manière synchrone permet également de conserver un taux de plastification requis même lors des variations de la vitesse de pose du profilé en sortie de l'ensemble 1. En effet, la vitesse des vis 11, 12 est amenée à varier pour adapter le débit de la pompe bi-vis 3 à celui du dispositif de pose ou d'enroulement de profilé en aval de la filière. Ainsi, lors des variations de la vitesse de rotation des vis 11 et 12, on ajuste, via le rapport de synchronisation établi pour un mélange donné, la vitesse de rotation de la vis 5 de l'extrudeuse 2, ce qui permet de garder constant le débit par tour de rotation.

On a par ailleurs constaté, lors des tests effectués en laboratoire, que les variations de vitesse de rotation entre la vis de l'extrudeuse et celles de la pompe bi-vis entraînent des variations importantes de la pression à l'intérieur de l'extrudeuse. On doit ainsi mesurer les valeurs de la pression afin de s'assurer qu'elle ne dépasse des valeurs limite préétablies nécessaires au bon fonctionnement de l'ensemble. On installe dans ce but un capteur de pression P dans la section de sortie 8 de l'extrudeuse 2. Le capteur est relié à l'unité de commande de l'ensemble qui détermine si les valeurs mesurées de la pression se situent dans l'intervalle compris entre une limite inférieure Pmin de la pression et une limite supérieure Pmax de celle-ci. On définit la valeur Pmin comme étant la valeur minimum de pression de gavage de la pompe bi-vis 3 de manière à bien remplir les cavités de la pompe et respecter sa volumétrie.

En fonctionnement, la pompe bi-vis 3 transfère le mélange d'élastomères, reçu via l'orifice d'entrée 30 de l'extrudeuse 2, à travers les cavités en C périphériques qui se forment lors de la rotation des vis 11 et 12 de manière à ce que la matière contenue dans les cavités avance de la valeur du pas du filet par tour de rotation. De ce fait, la vitesse de rotation des vis 11, 12 de la pompe bi-vis 3 est directement proportionnelle avec la variation de son débit. Ceci permet à l'unité de commande d'ajuster le débit de l'extrudeuse en fonction du signal mesuré par le capteur P et également de le maintenir constant en fonctionnement.

L'unité de contrôle est reliée également au motoréducteur 15 de la pompe bi-vis et au motoréducteur 6 de l'extrudeuse et elle est apte à commander la vitesse de rotation des vis 5, 11 et 12 en fonction de données reçues d'un capteur de pression P situé dans la zone de l'extrémité de sortie 8 de l'extrudeuse 2 d'alimentation.

D'autres variantes et modes de réalisation de l'invention peuvent être envisagés sans sortir du cadre de ses revendications. Ainsi, les vis de la pompe bi-vis peuvent être coniques et tourner autour d'axes concurrents. On pourrait aussi utiliser une pompe volumétrique à plusieurs vis. Dans une variante, on prévoit de rajouter des moyens d'étanchéité complémentaires à l'extrémité d'entraînement des vis de la pompe bi-vis pour parfaire l'étanchéité surtout lorsque les vis sont reliées à des conduits de refroidissement.

## Revendications

1. Ensemble d'extrusion (1) volumétrique destiné à l'extrusion d'un mélange d'élastomères, comportant une extrudeuse (2) d'alimentation à vis sans fin (5) qui tourne dans un fourreau (7) muni d'une trémie d'alimentation (4) en mélange qui est transféré à une extrémité de sortie (8) reliée à un orifice d'entrée (30) dans la chambre (15) du corps (14) d'une pompe bi-vis (3), la pompe bi-vis (3) comprenant deux vis (11,12) contrarotatives qui sont amenées à tourner à l'intérieur de ladite chambre (15) lorsqu'elles sont mises en rotation à une extrémité d'entraînement (16,17) pour transférer le mélange à une extrémité de sortie (20), les vis (11,12) comportant des filets en forme d'hélice qui sont réalisés de manière à ce qu'ils s'interpénètrent en ayant des profils conjugués, de sorte que les vis (11, 12) contrarotatives forment une pompe bi-vis (3) volumétrique et qu'elles forment avec la périphérie du corps (14) des cavités en forme de C (18), ensemble d'extrusion (1) au sein duquel l'hélice desdites vis (11, 12) présente un pas p, dans la zone d'alimentation (19) qui est la partie située entre les débuts des filets en amont, vers les extrémités d'entrainement (16, 17), et la sortie de l'orifice d'entrée (30), au sein duquel que ledit orifice d'entrée (30) est positionné avec son bord (35) le plus proche de ladite extrémité d'entraînement (16,17) à une distance d égale ou supérieure au pas p, la distance d étant mesurée à partir du début du filetage des vis (11, 12) de la pompe bi-vis au niveau de l'extrémité d'entraînement, de manière à garantir qu'une cavité en C (18) est fermée en amont au moment où ladite cavité en C (18) commence à s'ouvrir dans la zone d'alimentation (19), et qu'ainsi la rotation des vis contrarotatives (11, 12) empêche le passage du mélange en amont.

2. Ensemble selon la revendication 1, **caractérisé en ce que** le jeu radial entre la périphérie des filets des vis (11, 12) contrarotatives et la chambre (15) est compris entre 0,05 mm et 0,2 mm.

3. Ensemble selon l'une des revendications 1 ou 2, **caractérisé en ce que** ladite extrémité de sortie (8) est directement reliée audit orifice d'entrée (30).

4. Ensemble selon l'une des revendications précédentes, **caractérisé en ce que** les vis (11, 12) ont un pas variable sur leur longueur, le pas p ayant la plus petite valeur.

5. Ensemble selon l'une des revendications précédentes, **caractérisé en ce que** ledit orifice d'entrée (30) a une section transversale en forme de quadrilatère avec au moins l'un des côtés égal au pas p.

6. Ensemble selon l'une des revendications précédentes, **caractérisé en ce que** le filet de la vis (5) de l'extrudeuse d'alimentation (2) est sensiblement tangent aux filets des vis (11,12) de la pompe bi-vis (3).

7. Ensemble selon l'une des revendications précédentes, **caractérisé en ce que** la vis (5) de l'extrudeuse d'alimentation (2) comprend un moyen d'étanchéité dynamique (40) agencé à son extrémité de sortie.

8. Ensemble selon la revendication 7, **caractérisé en ce que** l'extrémité dudit moyen d'étanchéité dynamique (40) est disposée axialement au même niveau avec le bord (35) de l'orifice d'entrée (30).

9. Ensemble selon l'une des revendications précédentes, **caractérisé en ce que** ledit orifice d'entrée (30) est bordé de parois (36, 37) s'étendant radialement à l'intérieur de la chambre (15) de la pompe bi-vis (3).

10. Ensemble selon la revendication 9, **caractérisé en ce qu'**au moins l'une desdites parois (36,37) présente une face interne inclinée (38,39) en direction de l'axe des vis de la pompe bi-vis.

11. Ensemble selon l'une des revendications précédentes, **caractérisé en ce que** l'extrudeuse (2) à vis sans fin est agencée au-dessus de la pompe bi-vis (3).

12. Ensemble selon la revendication 11, **caractérisé en ce que** la direction de l'axe de rotation (X-X') de la vis (5) de l'extrudeuse sans fin (2) fait un angle compris entre 45° et 90° avec celle des axes (A-A', B-B') des vis (11,12) de la pompe bi-vis (3).

13. Ensemble selon l'une des revendications précédentes, **caractérisé en ce qu'**il comprend une unité centrale de commande reliée à des moyens de commande de la vitesse de rotation de la vis de l'extrudeuse d'alimentation et à des moyens de commande des vis de la pompe bi-vis prévue pour synchroniser la vitesse de rotation de la vis de l'extrudeuse d'alimentation et celle des vis de la pompe bi-vis selon un rapport prédéterminé.

14. Ensemble selon la revendication 13, **caractérisé en ce qu'**il comprend un capteur de pression (P) agencé dans la voûte de l'extrudeuse d'alimentation relié à ladite unité centrale de commande et **en ce que** cette dernière adapte ledit rapport de synchronisation en fonction du signal reçu dudit capteur.

## Patentansprüche

1. Extrusionsanordnung (1) zur volumetrischen Extrusion, die zum Extrudieren einer Elastomermischung bestimmt ist, beinhaltend einen Zuführextruder (2) mit Schnecke (5), die in einer Ummantelung (7) dreht, die mit einem Zuführtrichter (4) für Gemisch versehen ist, das zu einem Austrittsende (8) befördert wird, das mit einer Eintrittsöffnung (30) in der Kammer (15) des Körpers (14) einer Doppelschneckenpumpe (3) verbunden ist, wobei die Doppelschneckenpumpe (3) zwei gegenläufige Schnecken (11, 12) umfasst, die im Inneren der Kammer (15) drehen, wenn sie an einem Antriebsende (16, 17) in Drehung versetzt werden, um die Mischung zu einem Austrittsende (20) zu befördern, wobei die Schnecken (11, 12) wendelförmige Schneckengänge beinhalten, die so ausgeführt sind, dass sie ineinandergreifen, wobei sie konjugiert ausgebildete Profile haben, so dass die gegenläufigen Schnecken (11, 12) eine volumetrische Doppelschneckenpumpe (3) bilden und sie mit der Peripherie des Körpers (14) C-förmige Hohlräume (18) bilden, Extrusionsanordnung (1), in welcher die Wendel der Schnecken (11, 12) eine Steigung p aufweist in dem Zuführbereich (19), der der Teil ist, der zwischen den stromaufwärtigen Anfängen der Schneckengänge zu den Antriebsenden (16, 17) hin und dem Austritt der Eintrittsöffnung (30) gelegen ist, und in welcher die Eintrittsöffnung (30) mit ihrem zum Antriebsende (16, 17) nächstgelegenen Rand (35) in einem Abstand d größer oder gleich der Steigung p positioniert ist, wobei der Abstand d ausgehend vom Anfang des Schneckengangs der Schnecken (11, 12) der Doppelschneckenpumpe auf Höhe des Antriebsendes gemessen wird, so dass gewährleistet ist, dass ein C-förmiger Hohlraum (18) stromaufwärts zu dem Zeitpunkt geschlossen ist, zu dem der C-förmige Hohlraum (18) sich im Zuführbereich (19) zu öffnen beginnt, und dass somit die Drehung der gegenläufigen Schnecken (11, 12) den Durchgang der Mischung stromaufwärts verhindert.

2. Anordnung nach Anspruch 1, **dadurch gekennzeichnet, dass** das radiale Spiel zwischen der Peripherie der Schneckengänge der gegenläufigen Schnecken (11, 12) und der Kammer (15) zwischen 0,05 mm und 0,2 mm beträgt.

3. Anordnung nach einem der Ansprüche 1 oder 2, **dadurch gekennzeichnet, dass** das Austrittsende (8) direkt mit der Eintrittsöffnung (30) verbunden ist.

4. Anordnung nach einem der vorhergehenden Ansprüche, **dadurch gekennzeichnet, dass** die Schnecken (11, 12) eine über ihre Länge variable Steigung haben, wobei die Steigung p den kleinsten Wert hat.

5. Anordnung nach einem der vorhergehenden Ansprüche, **dadurch gekennzeichnet, dass** die Eintrittsöffnung (30) einen Querschnitt in Form eines Vierecks hat, bei dem mindestens eine der Seiten gleich der Steigung p ist.

6. Anordnung nach einem der vorhergehenden Ansprüche, **dadurch gekennzeichnet, dass** der Schneckengang der Schnecke (5) des Zuführextruders (2) die Schneckengänge der Schnecken (11, 12) der Doppelschneckenpumpe (3) im Wesentlichen tangiert.

7. Anordnung nach einem der vorhergehenden Ansprüche, **dadurch gekennzeichnet, dass** die Schnecke (5) des Zuführextruders (2) ein dynamisches Dichtmittel (40) umfasst, das an ihrem Austrittsende platziert ist.

8. Anordnung nach Anspruch 7, **dadurch gekennzeichnet, dass** das Ende des dynamischen Dichtmittels (40) axial auf gleicher Höhe mit dem Rand (35) der Eintrittsöffnung (30) angeordnet ist.

9. Anordnung nach einem der vorhergehenden Ansprüche, **dadurch gekennzeichnet, dass** die Eintrittsöffnung (30) von Wänden (36, 37) gesäumt wird, die sich radial im Inneren der Kammer (15) der Doppelschneckenpumpe (3) erstrecken.

10. Anordnung nach Anspruch 9, **dadurch gekennzeichnet, dass** mindestens eine der Wände (36, 37) eine Innenseite (38, 39) aufweist, die in Richtung der Achse der Schnecken der Doppelschneckenpumpe geneigt ist.

11. Anordnung nach einem der vorhergehenden Ansprüche, **dadurch gekennzeichnet, dass** der Schneckenextruder (2) oberhalb der Doppelschneckenpumpe (3) platziert ist.

12. Anordnung nach Anspruch 11, **dadurch gekennzeichnet, dass** die Richtung der Drehachse (X-X') der Schnecke (5) des Schneckenextruders (2) einen Winkel zwischen 45° und 90° mit derjenigen der Achsen (A-A', B-B') der Schnecken (11, 12) der Doppelschneckenpumpe (3) bildet.

13. Anordnung nach einem der vorhergehenden Ansprüche, **dadurch gekennzeichnet, dass** sie eine zentrale Steuereinheit umfasst, die mit Mitteln zum Steuern der Drehzahl der Schnecke des Zuführextruders und mit Mitteln zum Steuern der Schnecken der Doppelschneckenpumpe verbunden ist, um die Drehzahl der Schnecke des Zuführextruders und die der Schnecken der Doppelschneckenpumpe nach einem vorbestimmten Verhältnis zu synchronisieren.

14. Anordnung nach Anspruch 13, **dadurch gekennzeichnet, dass** sie einen im Gewölbe des Zuführextruders platzierten Drucksensor (P) umfasst, der mit der zentralen Steuereinheit verbunden ist, und dass Letztere das Synchronisationsverhältnis in Abhängigkeit von dem von dem Sensor empfangenen Signal anpasst.

## Claims

1. Volumetric extrusion assembly (1) intended for extruding a mixture of elastomers, comprising a feed extruder (2) with an endless screw (5) that rotates inside a barrel (7) equipped with a feed hopper (4) feeding mixture that is transferred to an outlet end (8) connected to an inlet orifice (30) opening into the chamber (15) of the body (14) of a twin-screw pump (3), the twin-screw pump (3) comprising two contrarotating screws (11, 12) which are made to rotate inside said chamber (15) when set in rotation at a drive end (16, 17) in order to transfer the mixture to an outlet end (20), the screws (11, 12) having flights in the form of a helix which are produced in such a way that they intermesh, having conjugated profiles, so that the contrarotating screws (11, 12) form a twin-screw volumetric pump (3) and so that they, with the periphery of the body (14), form C-shaped cavities (18), within which extrusion assembly (1) the helix of said screws (11, 12) has a pitch p, in the feed zone (19), which zone is the part situated between the starts of the flights upstream, towards the drive ends (16, 17), and the outlet of the inlet orifice (30), within which extrusion assembly said inlet orifice (30) is positioned so that its edge (35) closest to said drive end (16, 17) is at a distance d equal to or greater than the pitch p, the distance d being measured from the start of the flights of the screws (11, 12) of the twin-screw pump at the drive end, so as to ensure that a C-shaped cavity (18) is closed upstream at the moment at which said C-shaped cavity (18) begins to open in the feed zone (19), and so that the rotation of the contrarotating screws (11, 12) thus prevents the passage of the mixture in the upstream direction.

2. Assembly according to Claim 1, **characterized in that** the radial clearance between the periphery of the flights of the contrarotating screws (11, 12) and the chamber (15) is comprised between 0.05 mm and 0.2 mm.

3. Assembly according to one of Claims 1 and 2, **characterized in that** said outlet end (8) is directly connected to said inlet orifice (30).

4. Assembly according to one of the preceding claims, **characterized in that** the screws (11, 12) have a pitch that varies along their length, the pitch p having the smallest value.

5. Assembly according to one of the preceding claims, **characterized in that** said inlet orifice (30) has a cross section in the shape of a quadrilateral having at least one of the sides equal to the pitch p.

6. Assembly according to one of the preceding claims, **characterized in that** the flight of the screw (5) of the feed extruder (2) is substantially tangential to the flights of the screws (11, 12) of the twin-screw pump (3) .

7. Assembly according to one of the preceding claims, **characterized in that** the screw (5) of the feed extruder (2) comprises a dynamic sealing means (40) arranged at its outlet end.

8. Assembly according to Claim 7, **characterized in that** the end of said dynamic sealing means (40) is positioned axially at the same level with the edge (35) of the inlet orifice (30).

9. Assembly according to one of the preceding claims, **characterized in that** said inlet orifice (30) is bordered by walls (36, 37) extending radially inside the chamber (15) of the twin-screw pump (3).

10. Assembly according to Claim 9, **characterized in that** at least one of said walls (36, 37) has an internal face (38, 39) that is inclined in the direction of the axis of the screws of the twin-screw pump.

11. Assembly according to one of the preceding claims, **characterized in that** the endless-screw extruder (2) is arranged above the twin-screw pump (3).

12. Assembly according to Claim 11, **characterized in that** the direction of the axis of rotation (X-X') of the screw (5) of the endless-screw extruder (2) forms an angle of between 45° and 90° with that of the axes (A-A', B-B') of the screws (11, 12) of the twin-screw pump (3).

13. Assembly according to one of the preceding claims, **characterized in that** it comprises a central control unit connected to means for controlling the rotational speed of the screw of the feed extruder and to means for controlling the screws of the twin-screw pump and which control unit is intended to synchronize the rotational speed of the screw of the feed extruder with that of the screws of the twin-screw pump according to a predetermined ratio.

14. Assembly according to Claim 13, **characterized in that** it comprises a pressure sensor (P) arranged in the roof of the feed extruder and connected to said central control unit, and **in that** the latter adapts said synchronization ratio according to the signal received from said sensor.
